# EUROPÄISCHE PATENTSCHRIFT

(11) **EP 2 882 673 B1**
(45) Veröffentlichungstag und Bekanntmachung des Hinweises auf die Patenterteilung: **09.03.2016**
(21) Anmeldenummer: 13747797.2
(22) Anmeldetag: 07.08.2013
(51) Int. Cl.: B65G 47/86

(54) **BEHÄLTERGREIFER SOWIE TRANSPORTELEMENT MIT DERARTIGEN BEHÄLTERGREIFERN**
CONTAINER GRIPPER AND TRANSPORTING ELEMENT WITH SUCH CONTAINER GRIPPERS
PRÉHENSEUR DE RÉCIPIENTS AINSI QU'ÉLÉMENT DE TRANSPORT POURVU DE TELS PRÉHENSEURS DE RÉCIPIENTS

(30) Priorität: 13.08.2012 DE 102012015886
(43) Veröffentlichungstag der Anmeldung: 17.06.2015
(73) Patentinhaber: KHS GmbH, 44143 Dortmund (DE)
(72) Erfinder: SINGUR, Igor, 55545 Bad Kreuznach (DE)
(86) Internationale Anmeldenummer: PCT/EP2013/002359
(87) Internationale Veröffentlichungsnummer: WO 2014/026747

(56) Entgegenhaltungen:
- US-A1- 2011 109 110

## Beschreibung

Die Erfindung bezieht sich auf eine Klammer oder einen klammerartigen Behältergreifer zum Greifen und Halten von Flaschen oder dergleichen Behältern gemäß Oberbegriff Patentanspruch 1 sowie auf ein Transportelement gemäß Oberbegriff Patentanspruch 9.

Bei Transportelementen z.B. in Form von Transport- und Übergabesternen von Behälter- oder Flaschenbehandlungsmaschinen ist bekannt, die Behälter an einem Behälterbereich unmittelbar unterhalb der Behältermündung mittels Behältergreifer hängend, d.h. mit ihren Behälterachsen vertikal oder im Wesentlichen vertikal orientiert zu halten (DE 10 2010 005 673 A1, DE 10 2009 018 733 A1). Dies hat u.a. auch den Vorteil, dass in Formgebung, in Größe usw. sehr unterschiedliche Behälter mit dem jeweiligen Transportelement bzw. mit den dortigen Behältergreifern transportiert werden können, ohne dass ein Austausch von Behälterführungs- und/oder Formatteilen erforderlich ist, sofern die Behälter jeweils dieselbe Ausbildung am Behälterbereich unterhalb der Behältermündung aufweisen. Speziell bei Behältern in Form von Flaschen ist hierbei auch üblich, diese unterhalb der Mündung mit einem Halsring (Neckring) auszubilden und die Behälter dann an diesem Halsring mittels der Behältergreifer der Transportelemente hängend zu halten.

In der Praxis hat sich allerdings gezeigt, dass die bisher bekannten und üblichen Behältergreifer vielfach nicht geeignet sind, gefüllte Behälter, d.h. solche mit hohem Gewicht oder großer Masse speziell auch bei hoher Leistung bzw. bei hohen Drehzahlen des jeweiligen Transportelementes sicher zu halten und zu transportieren. Es ist bisher vielmehr nicht auszuschließen, dass aufgrund der hoher Flieh- und Zentrifugalkräfte, die bei umlaufendem Transportelement auf die Behälter ausgeübt werden, diese aus den Behältergreifern bzw. aus den dortigen Behälteraufnahmen herausgerissen werden.

Um diesem Problem zu begegnen wurde auch bereits vorgeschlagen (DE 10247362 B1), die Behältergreifer so auszubilden, dass deren Behälteraufnahmen den jeweiligen Behälterabschnitt auch an einem bezogen auf die Dreh- oder Maschinenachse des Transportelementes radial außen liegenden Bereich zumindest teilweise umgreifen. Derartige Behältergreifer sind aber mechanisch aufwendig und teuer.

Bekannt sind weiterhin Behältergreifer mit den Merkmalen des Oberbegriffs des Patentanspruches 1 (US 2011/010 9110 A1). Auch bei diesen bekannten an einem umlaufenden Transportelement vorgesehenen Behältergreifern lässt sich nicht ausschließen, dass die Behälter aufgrund hoher Flieh- und Zentrifugalkräfte, die bei umlaufendem Transportelement auf die Behälter ausgeübt werden, aus dem Behältergreifern herausgerissen werden.

Bekannt sind weiterhin Behältergreifer (DE 200 20 457 U1) mit jeweils zwei einen Behälterhaltebereich zwischen sich bildenden Greiferarmen, die von den Schenkeln eines bügelartigen Greiferelementes gebildet sind. Zum Öffnen und Schließen der an einem umlaufenden Transportelement vorgesehenen Behältergreifer sind an dem an dem umlaufenden Transportelement mit den Greiferarmen zusammenwirkende Steuernocken vorgesehen.

Aufgabe der Erfindung ist es, einen Behältergreifer aufzuzeigen, der besonders preiswert gefertigt werden kann. Zur Lösung dieser Aufgabe ist ein Behältergreifer entsprechend dem Patentanspruch 1 ausgebildet. Ein Transportelement ist Gegenstand des Patentanspruchs 9.

Der erfindungsgemäße Behältergreifer ist mit sämtlichen für seine Funktion erforderlichen Elementen einstückig gefertigt, insbesondere mit wenigstens zwei die Behälteraufnahme bildenden flachen Armen oder Segmenten, mit wenigstens einem eine federnde Schließ- oder Klemmkraft erzeugenden Federabschnitt sowie bevorzugt auch mit einem Sperr- und Verriegelungsabschnitt. Letzterer ist dann federnd zwischen einer den Behältergreifer gegen ein Öffnen formschlüssig verriegelnden oder sperrenden Position und einer den Behältergreifer für ein Öffnen gegen Federkraft freigebenden Position bewegbar ist. Im Ausgangszustand des Behältergreifers befindet sich dieser Verriegelungsabschnitt bevorzugt in seinem sperrenden Zustand, d.h. der Behältergreifer ist als selbsttätig verriegelnde Behälter- oder Flaschenklammer ausgebildet.

Der erfindungsgemäße Behältergreifer ist bevorzugt aus einem metallischen Flachmaterial mit ausreichender Eigenelastizität und dabei sehr bevorzugt aus Edelstahl, beispielsweise aus Edelstahl der Stahl-Nr. 1.4310 gefertigt, und zwar durch Stanzen und/oder Ausschneiden (auch Laser-Schneiden) und Biegen.

Wesentliche Vorteile des erfindungsgemäßen Behältergreifers sind u.a.:
- eine preiswerte Fertigung
- Vermeidung von Druck- und Zugfedern sowie von zusätzlichen Gelenken,
- kostengünstige Herstellung,
- Vermeidung von zusätzlichen, an unterschiedliche Behälter angepasste Formatteile,
- Vermeidung von schwer zugänglichen Bereichen und daher gute Reinigbarkeit,
- sicherer Transport auch von Behältern mit großer Masse.

Speziell bei Verwendung von Edelstahl ergibt sich eine hohe Korrosionsbeständigkeit, insbesondere auch gegenüber Reinigungs- und/oder Sterilisationsmedien, die beispielsweise bei dem aseptischen Abfüllen von Füllgut zum Reinigen und/oder Desinfizieren der Behälter 2, aber auch zum Reinigen und/oder Desinfizieren der Transportelemente eingesetzt werden, wie beispielsweise Wasserstoffperoxid (H2O2).

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in vereinfachter Teildarstellung und in Draufsicht ein umlaufendes scheiben- oder rotorartige Transportelement zusammen mit einem der dortigen Behältergreifer und einem an diesem hängend gehaltenen Behälter in Form einer Flasche;
- Fig. 2: in perspektivischer Darstellung den Behältergreifer und den an diesem gehaltenen Behälter;

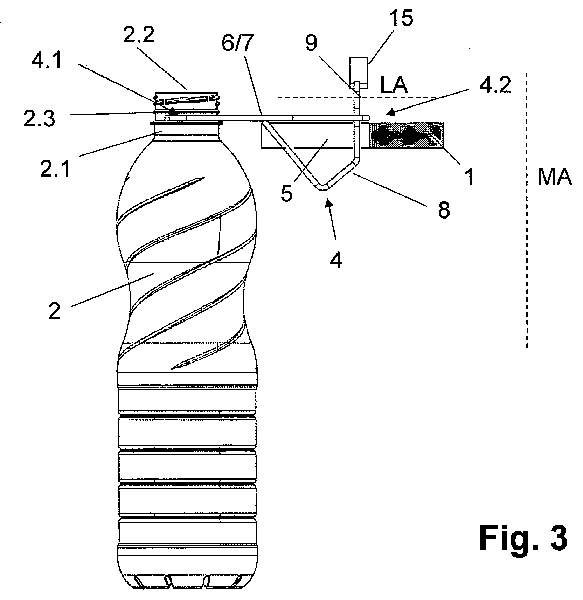

- Fig. 3: das Transportelement zusammen mit dem Behältergreifer und mit dem an diesem hängend gehaltenem Behälter in Seitenansicht;
- Fig. 4 und 5: jeweils in perspektivischer Einzeldarstellung den Behältergreifer in unterschiedlichen Blickrichtungen;
- Fig. 6: den Behältergreifer in Draufsicht;
- Fig. 7: in vereinfachter Darstellung eine Rückansicht des Behältergreifers, teilweise im Schnitt.

In den Figuren ist 1 ein um eine vertikale Maschinenachse MA umlaufend antreibbares scheiben- oder rotorartiges Transportelement (Kreisel) einer Behälterbehandlungsmaschine oder einer Anlage zum Behandeln von Behältern 2, die in den Figuren beispielhaft als Flaschen aus Kunststoff, vorzugsweise aus PET dargestellt sind. Das Transportelement 1 bildet an seinem Umfang eine Vielzahl von Transportpositionen 3, die beispielsweise reine Transportpositionen eines Behältertransportsystems oder aber Behandlungspositionen einer Behandlungsmaschine für die Behälter 2 sind. Die Transportpositionen 3 sind in gleichmäßigen Winkelabständen um die vertikale Maschinenachse MA des Transportelementes 1 und in demselben radialen Abstand von dieser Maschinenachse MA am Umfang des Transportelementes 1 vorgesehen. Jede Transportposition 3 besitzt zumindest einen Behältergreifer 4 zur Aufnahme jeweils eines Behälters 2 und zum hängenden Halten dieses Behälters 2 an seinem Behälterbereich 2.1. Dieser Behälterbereich 2.1 befindet sich in geringem Abstand unterhalb der Behältermündung 2.2 und besitzt einen reduzierten Außenquerschnitt. Bei Ausbildung der Behälter 2 als Flaschen ist der Behälterbereich 2.1 der Hals- oder Mündungsbereich mit dem Mündungsflansch (Neckring) 2.3.

Jeder Behältergreifer 4 ist zangen- oder klammerartig federnd derart ausgebildet, dass die beispielsweise von einem weiteren Transportelement 1 a zugeführten Behälter 2 an einem Übergabebereich zwischen den Transportelementen 1 und 1a mit ihrem Behälterbereich 2.1 in jeweils einen Behältergreifer 4 des Transportelementes 1 seitlich, d.h. radial oder im Wesentlichen radial zur Maschinenachse MA eingeschoben und dann am Ende der von dem Transportelement 1 gebildeten Transportstrecke an einem weiteren Übergabebereich wieder radial oder im Wesentlichen radial von dem Behältergreifer 4 abgenommen werden können. Das Einschieben und Abnehmen der Behälter 2 erfolgt jeweils gegen die federnde, die Behälter 2 an ihrem Behalterbereich 2.1 klemmende Klemmkraft. Der Behältergreifer 4 ist weiterhin so ausgebildet, dass er nach dem Einschieben eines Behälters 2 starr bzw. formschlüssig gegen Öffnen verriegelt ist, sodass auch Behälter 2 mit großer Masse selbst bei schnell umlaufenden Transportelement 1 sicher an der jeweiligen Transportposition 3 gehalten sind.

Jeder Behältergreifer 4 ist einstückig mit zwei langgestreckten oder hebelartigen Segmenten 6 und 7 und mit einem bügelförmigen Federabschnitt 8 hergestellt, der an einem Ende eine Verriegelungslasche 9 bildet. Mit ME ist eine Mittelebene bezeichnet, die senkrecht zu den Oberflächenseiten der flachen Segmente 6 und 7 orientiert ist und zu der bei der dargestellten Ausführungsform der Behältergreifer 4 spiegelsymmetrisch ausgebildet ist. Im montierten Zustand der Behältergreifer 4 ist die Mittelebene ME auch radial zur Maschinenachse MA des Transportelementes 1 orientiert bzw. schließt diese Achse ein.

Die beiden Segmente 6 und 7 sind flach ausgeführt und mit ihren Oberflächenseiten jeweils in gemeinsamen Ebenen angeordnet, die senkrecht zur Mittelebene ME und bei am Transportelement 1 montiertem Behältergreifer 4 senkrecht zur Maschinenachse MA orientiert sind. Weiterhin sind die Segmente 6 und 7, die sich jeweils in Richtung einer in der Mittelebene ME zwischen einer Vorderseite 4.1 und einer Rückseite 4.2 des Behältergreifers 4 verlaufenden Längsachse LA erstrecken, voneinander beabstandet und an Vorderseite 4.1 an ihren einander zugewandten innen liegenden Seiten mit einem konkaven Randbereich 10 versehen, und zwar derart, dass sich diese Randbereiche 10 zu einer Behälteraufnahme 11 ergänzen, die an der Vorderseite 4.1 offen und in der der jeweilige an einer Transportposition 3 gehaltene Behälter 2 mit seinem Behälterbereich 2.1 aufgenommen ist und hierbei von den Segmenten 6 und 7 auf einem Umfangsbereich etwas größer 180° umschlossen ist.

Während die beiden Segmente 6 und 7 über den größeren Teil ihrer sich in Richtung der Längsachse LA erstreckenden Länge und insbesondere auch an der Rückseite 4.2 des Behältergreifers 4 voneinander beabstandet sind, sind die Segmente 6 und 7 in der Nähe der Behälteraufnahme 11 mit einem nach innen verlaufenden Abschnitt 12 versehen. An den beiden Abschnitten 12, die im Normalzustand, d.h. im entspannten Zustand des Behältergreifers 4 nur einen geringen Abstand voneinander aufweisen und an denen die Randbereiche 10 ebenfalls ausgebildet sind, gehen die beiden Segmente 6 und 7 jeweils in einen von zwei Schenkeln 13 des bügelartigen Federabschnittes 8 über, und zwar an der der Behälteraufnahme 11 abgewandten Seite der Abschnitte 12. Die beiden beidseitig der Mittelebene ME angeordneten Schenkel 13 sind mehrfach abgewinkelt, sodass der Federabschnitt 8 in einer Ansicht senkrecht zur Mittelebene ME hakenartig geformt ist und dadurch über die eine Seite, d.h. über die Unterseite des Behältergreifers 4 vorsteht. Jeder Schenkel 13 weist hierfür ausgehend von dem Abschnitt 12 zunächst einen Schenkelabschnitt 13.1, der mit seiner Oberseite und Unterseite in der entsprechenden Ebene der Segmente 6 und 7 liegt, daran anschließend einen schräg nach unten und zur Rückseite 4.2 verlaufenden Schenkelabschnitt 13.2, daran anschließend einen schräg nach oben verlaufenden Schenkelabschnitt 13.3 und daran anschließend an der Rückseite 4.2 einen senkrecht oder im wesentlichen senkrecht nach oben verlaufenden Schenkelabschnitt 13.4 auf, der dann in die die beiden Schenkel 13 dort verbindende Verriegelungslasche 9 übergeht. Die Schenkelabschnitte 13.2 besitzen somit ausgehend von dem jeweiligen Schenkelabschnitt 13.1 in Richtung zum Schenkelabschnitt 13.3 einen sich zunehmend vergrößernden Abstand von der Ebene der Segmente 6 und 7. Die Schenkelabschnitte 13.3 besitzen somit ausgehend von dem jeweiligen Schenkelabschnitt 13.2 in Richtung zum Schenkelabschnitt 13.4 einen zunehmend abnehmenden Abstand von der Ebene der Segmente 6 und 7. Die Schenkelabschnitte 13.4 erstrecken sich somit senkrecht oder im Wesentlichen senkrecht zu der Ebene der Segmente 6 und 7. Es versteht sich aber, dass die Hakenform des Federabschnittes 8 auch dadurch erreicht sein kann, dass die Schenkel 13 kontinuierlich oder im Wesentlichen kontinuierlich dem Verlauf der Schenkelabschnitte 13.1 - 13.4 folgend gekrümmt sind.

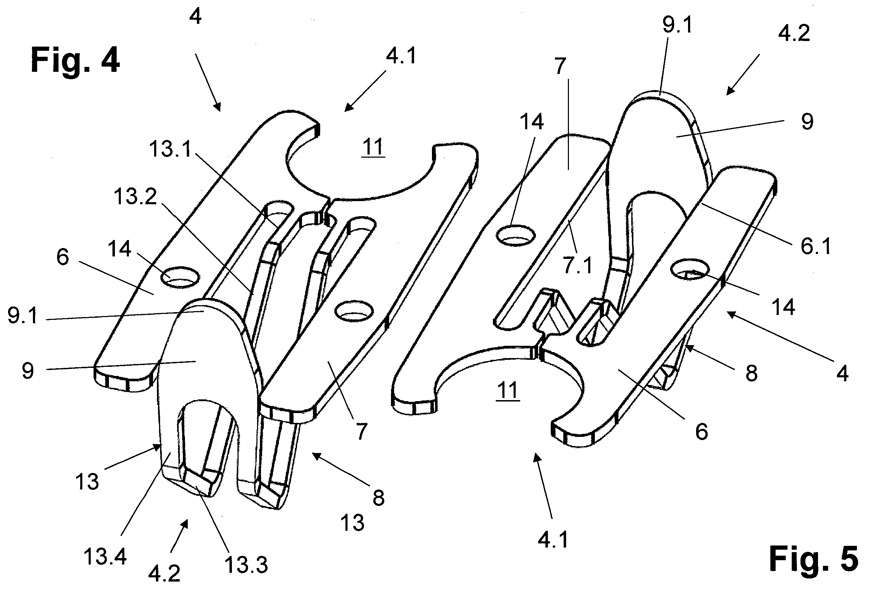

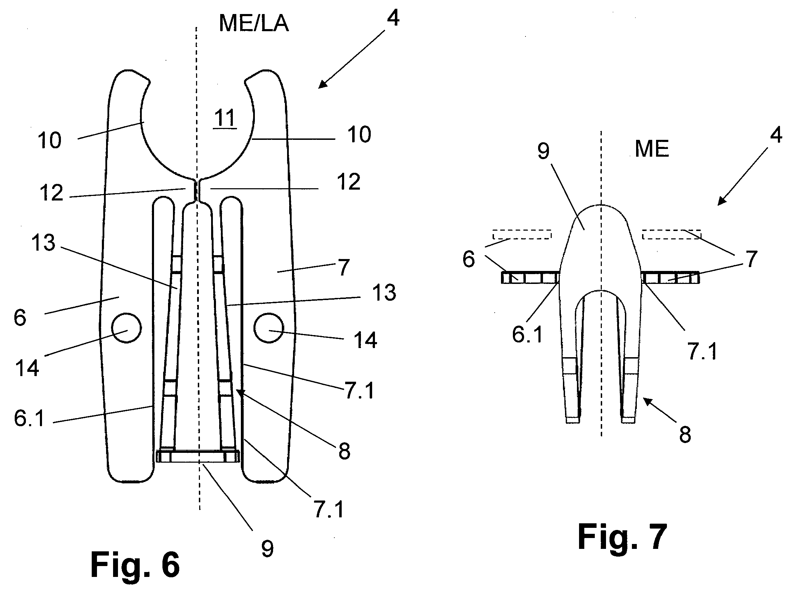

Wie insbesondere die Figuren 5 und 6 zeigen, ist im Normalzustand des Behältergreifers 4 die über die andere Seite, d.h. über die Oberseite des Behältergreifers 4 vorstehende Verriegelungslasche 9 mit ihren Oberflächenseiten senkrecht oder im Wesentlichen senkrecht zur Längsachse LA orientiert und so angeordnet, dass sie an der Rückseite 4.2 mit ihrem Rand gegen die einander zugewandten und Sperrflächen bildenden Innenseiten oder -ränder 6.1 und 7.1 der Segmente 6 und 7 anliegt. Weiterhin ist die Verriegelungslasche 9 so ausgebildet, dass sie sich zu ihrem den Schenkelabschnitten 13.4 entfernt liegenden freien Ende 9.1 hin verjüngt.

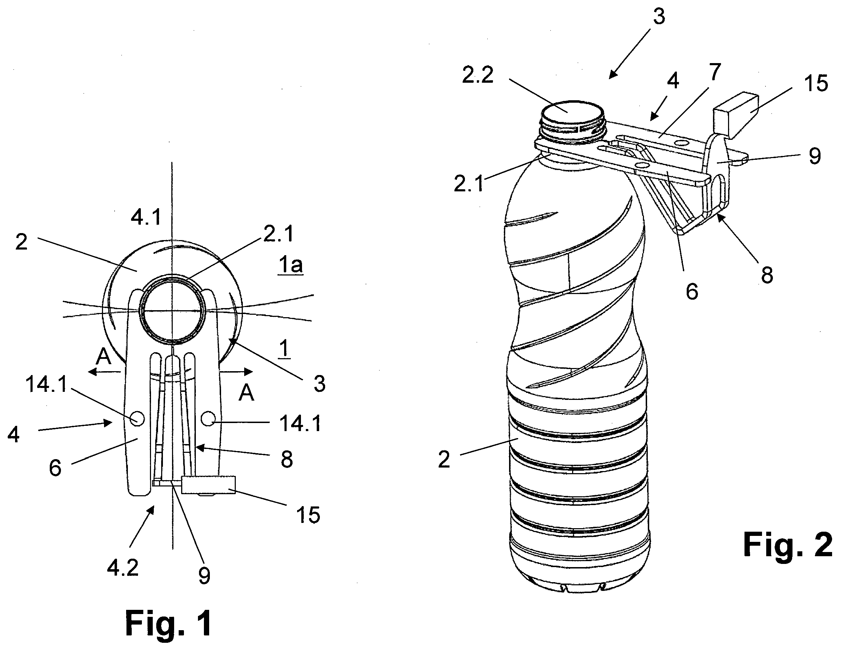

Jedes Segment 6 und 7 ist jeweils mit einer Bohrung 14 versehen, und zwar in dem Abschnitt zwischen der Behälteraufnahme 11 und der Rückseite 4.2, wobei zumindest bei der dargestellten Ausführungsform jede Bohrung 14 von der Rückseite 4.2 einen kleineren Abstand aufweist als von Vorderseite 4.1. Unter Verwendung geeigneter Bolzen oder Schrauben, die in den Figuren mit 14.1 bezeichnet sind, sind die Segmente 6 und 7 an ihren Bohrungen 14 jeweils schwenkbar mit dem Transportelement 1 verbunden, und zwar derart, dass die beiden Segmente 6 und 7 für das Einschieben und Abnehmen des jeweiligen Behälters 2 in die Behälteraufnahme 11 bzw. aus der Behälteraufnahme 11, d.h. zum Öffnen des Behältergreifers 4 gegen die Wirkung der von dem Federabschnitt 8 erzeugten Federkraft auseinander bewegt werden können, wie dies in der Figur 1 mit den dortigen Pfeilen A angedeutet ist. Durch den bügelartigen Federabschnitt 8 ist der Behältergreifer 4 in den geschlossenen Zustand seiner Behälteraufnahme 11 vorgespannt.

Im Detail erfolgt die Montage der Behältergreifern 4 im Bereich von randseitigen Ausnehmungen 5 des Transportelementes 1 derart, dass die Verriegelungslaschen 9 über die den Schenkelabschnitten 13.2 - 13.4 abgewandte Oberseite der Behältergreifer 4 vorstehen. Im Normalzustand jedes Behältergreifers 4 sind dessen Segmente 6 und 7 durch die gegen die Innenränder 6.1 und 7.1 anliegende Verriegelungslasche 9 starr verriegelt, sodass ein Öffnen der jeweiligen Behälteraufnahme 11 nicht möglich ist. Für das Einschieben und Abnehmen der Behälter 2 in einen Behältergreifer 4 bzw. von einem Behältergreifer 4 wird dessen Verriegelungslasche 9 unter elastischer Verformung des Federabschnittes 8 nach unten gedrückt, sodass die Verriegelungslasche 9 die beiden Segmente 6 und 7 für ein Schwenken im Sinne eines Öffnens der Behälteraufnahme 11 freigibt, wie dies in der Figur 7 bei 6 und 7 mit unterbrochenen Linien angedeutet ist. Hierfür ist beispielsweise an der jeweiligen Übergabeposition, an der das Einschieben oder Abnehmen erfolgt, ein Betätigungselement, z.B. in Form eines Kurvenelementes oder Auflaufkeils 15 vorgesehen, gegen welches die jeweilige Verriegelungslasche 9 mit ihrem oberen Ende 9.1 aufläuft. Auch andere Steuer- oder Betätigungselemente für das Bewegen der Verriegelungslasche 9 aus dem sperrenden Zustand in den nicht sperrenden Zustand, beispielsweise solche in Form von Kolben-Zylinder-Anordnungen oder mit Kolben-Zylinder-Anordnungen usw. sind möglich.

Die Besonderheit der Erfindung besteht darin, dass der jeweilige Behältergreifer 4 einschließlich der vorstehend beschriebenen Sperrfunktion einstückig hergestellt ist. Die Herstellung erfolgt bevorzugt durch Ausschneiden oder Stanzen sowie Biegen aus einem elastisch verformbaren Flachmaterial, beispielsweise aus einem elastisch verformbaren metallischen Flachmaterial und dabei bevorzugt aus einem elastisch verformbaren Edelstahl, z.B. aus einem Edelstahl mit der Nummer 1.4310.

Der bügelförmige Federabschnitt 8 dient beispielsweise zur Erzeugung der die Segmente 6 und 7 bewegenden oder rückstellenden Federkraft, wobei die Segmente 6 und 7 im geschlossenen Zustand nicht gegeneinander vorgespannt sind. Eine Federkraft entsteht bei dieser Ausführungsform erst dann, wenn der bügelförmige Federabschnitt 8 durch das Auseinanderbewegen der Segmente 6 und 7 elastisch verformt wird, beispielsweise beim Einbringen eines Behälters in die Klammer.

In einer weiteren Ausführungsform der Erfindung dient der bügelförmige Federabschnitt 8 zur Erzeugung einer die Behälteraufnahme 11 bereits in ihrem geschlossenen Zustand vorspannenden Federkraft.

Der bügelförmige Federabschnitt 8 erfüllt aber zugleich mit der Verriegelungslasche 9 auch die Funktion des Sperrens bzw. Verriegelns der Behälteraufnahme 11 und ermöglicht es außerdem, die Verriegelungslasche 9 gegen Federwirkung aus der verriegelnden in die nicht verriegelnde Stellung zu bewegen.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird. So kann das Transportelement auch ein von einem Rotor oder Kreisel abweichendes Transportelement sein.

### Bezugszeichenliste

- 1, 1a: Transportelement
- 2: Behälter
- 2.1: Behälterbereich
- 2.2: Behälteröffnung
- 2.3: Mündungsflansch
- 3: Transportposition
- 4: Behältergreifer
- 4.1: Vorderseite
- 4.2: Rückseite
- 5: Ausnehmung
- 6,7: Segment
- 6.1,7.1: Rand
- 8: Federabschnitt
- 9: Verriegelungslasche
- 9.1: Ende der Verriegelungslasche
- 10: Randbereich
- 11: Behälteraufnahme
- 12: Abschnitt
- 13: Schenkel
- 13.1 - 13.4: Schenkelabschnitt
- 14: Bohrung
- 14.1: Schwenkbolzen
- 15: Betätigungselement zum Endriegen der Endriegelungslaschen 9

- A: Schwenkrichtung der Arme bzw. Segment zum Öffnen der Behältergreifer
- LA: Längsachse
- ME: Mittelebene

## Patentansprüche

1. Behältergreifer für eine hängende Halterung von Behältern an einem Behälterbereich (2.1) unterhalb einer Behältermündung (2.2), beispielsweise von Flaschen an einem Flaschenhals, mit zwei Armen oder Segmenten (6, 7), die an einer Vorderseite (4.1) des Behältergreifers (4) zwischen sich eine Behälteraufnahme (11) bilden und zum Öffnen der Behälteraufnahme (11) gegen die Wirkung einer Schließkraft aus einer Schließstellung auseinander bewegbar sind, wobei der Behältergreifer (4) hierfür mit den die Behälteraufnahme (11) bildenden Segmenten (6, 7) und mit einem zwischen diesen Segmenten (6, 7) wirkenden, die Segmente (6, 7) in die Schließstellung vorspannenden Federabschnitt (8) hergestellt ist,
**dadurch gekennzeichnet,**
**dass** der Behältergreifer einstückig mit einem Verriegelungsabschnitt (9) hergestellt ist, der federnd zwischen einer den Behältergreifer (4) verriegelnden Stellung und einer den Behältergreifer (4) nicht verriegelnden Stellung bewegbar ist.

2. Behältergreifer nach Anspruch 1, **dadurch gekennzeichnet, dass** der Federabschnitt (8) bügelförmig ausgebildet und/oder zwischen den Segmenten (6, 7) angeordnet ist.

3. Behältergreifer nach Anspruch 1 oder 2, **dadurch gekennzeichnet, dass** die Segmente (6, 7) jeweils für eine schwenkbare Befestigung an dem Transportelement (1) ausgebildet sind.

4. Behältergreifer nach einem der vorhergehenden Ansprüche, **dadurch gekennzeichnet, dass** der Federabschnitt (8) im Bereich der Behälteraufnahme (11) in die Segmente (6, 7) übergeht.

5. Behältergreifer nach einem der vorhergehenden Ansprüche, **dadurch gekennzeichnet, dass** bei bügelförmiger Ausbildung des Federabschnittes (8) dieser wenigstens zwei Schenkel (13) aufweist, die an einem Ende jeweils an einander zugewandten Innenseiten der Segmente (6, 7) in diese übergehen.

6. Behältergreifer nach einem der vorhergehenden Ansprüche, **dadurch gekennzeichnet, dass** bei bügelförmiger Ausbildung des Federabschnittes (8) die beiden Schenkel (13) über eine den Verriegelungsabschnitt (9) bildende Verriegelungslasche ineinander übergehen, und dass die sich zu einem freien Ende (9.1) hin in der Breite verjüngende Verriegelungslasche in der verriegelnden Stellung mit ihrem Rand gegen einander zugewandte Innenflächen oder -ränder (6.1, 7.1) der Segmente (6, 7) anliegt.

7. Behältergreifer nach einem der vorhergehenden Ansprüche, **dadurch gekennzeichnet, dass** die Segmente (6, 7) flach oder nach Art von flachen Hebeln ausgebildet sind.

8. Behältergreifer nach einem der vorhergehenden Ansprüche, **dadurch gekennzeichnet, dass** bei bügelförmiger Ausbildung des Federabschnittes (8) die Schenkel (13) des Federabschnittes (8) derart gebogen oder abgewinkelt sind, dass sich für den Federabschnitt (8) ein hakenartiger Verlauf in der Weise ergibt, dass der Federabschnitt (8) in Richtung zu einer der Behälteraufnahme (11) abgewandten Rückseite (4.2) des Behältergreifers (4) zunächst einen zunehmenden Abstand von den Segmenten (6, 7) aufweist und anschließend mit einer den Verriegelungsabschnitt (9) bildenden Verriegelungslasche in den Raum zwischen den Segmenten (6, 7) hineinreicht.

9. Transportelement für Behälter (2), mit mehreren Transportposition (3), die jeweils einen Behältergreifer (4) zur hängenden Befestigung eines Behälters (2) an einem Behälterbereich (2.1) unterhalb einer Behältermündung (2.2) aufweisen, **dadurch gekennzeichnet, dass** die Behältergreifer (4) nach einem der vorhergehenden Ansprüche ausgebildet sind.

10. Transportelement nach Anspruch 10, **dadurch gekennzeichnet, dass** an Übergabebereichen, an denen eine Behälterübergabe an die Transportpositionen (3) und eine Behälterabnahme von den Transportpositionen (3) erfolgt, Mittel zum Bewegen des jeweiligen Verriegelungsabschnitts (9) in seinen nicht verriegelnden Zustand vorgesehen sind.

11. Transportelement nach Anspruch 10 oder 11, **dadurch gekennzeichnet, dass** Mittel zum Bewegen des jeweiligen Verriegelungsabschnitts (9) in seinen nicht verriegelnden Zustand von einer Auflaufkante oder von einem Auflaufkeil (15) gebildet sind.

## Claims

1. Container gripper for holding containers suspended by a container region (2.1), for example bottles by a bottle neck, beneath a container mouth (2.2), having two arms or segments (6, 7) which on a front side (4.1) of the container gripper (4) form a container mount (11) between them and to allow the container mount (11) to be opened can be moved apart from one another from a closed position against the action of a closing force; for this purpose the container gripper (4) is produced with the segments (6, 7) which form the container mount (111) and with a spring portion (8) acting between these segments (6, 7) and pre-tensioning the segments (6, 7) into the closed position, wherein the container gripper is produced in one piece with a locking portion (9) which can move under spring action between a position in which the container gripper (4) is locked and a position in which the container gripper (4) is not locked.

2. The container gripper of claim 1 wherein the spring portion (8) is configured in the form of a bow and/or is disposed between the segments (6, 7).

3. The container gripper of claim 1 or 2 wherein the segments (6, 7) are each configured for a swivel attachment to the transporting element (1).

4. The container gripper of any one of the preceding claims wherein the spring portion (8) joins the segments (6, 7) in the region of the container mount (11).

5. The container gripper of any one of the preceding claims wherein, when configured in the form of a bow, the spring portion (8) comprises at least two legs (13), one end of each of which joins inner sides of the segments (6, 7), which inner sides face one another.

6. The container gripper of any one of the preceding claims wherein, with the spring portion (8) configured in the form of a bow, the two legs (13) come together through a locking tab which forms the locking portion (9), and when it is in the locking position the locking tab which narrows in width towards a free end (9.1) lies with its edge up against inner faces or inner edges (6.1, 7.1) of the segments (6, 7), which inner faces or inner edges face one another.

7. The container gripper of any one of the preceding claims wherein the segments (6, 7) are configured to be flat or in the manner of flat levers.

8. The container gripper of any one of the preceding claims wherein, with the spring portion (8) configured in the form of a bow, the legs (13) of the spring portion (8) are bent or angled in such a way that the spring portion (8) adopts a hook-like profile in that, looking towards a rear side (4.2) of the container gripper (4) facing away from the container mount (11), the spring portion (8) initially comprises an increasing distance from the segments (6, 7) and subsequently reaches into the space between the segments (6, 7) with a locking tab which forms the locking portion (9).

9. Transporting element for containers (2), having a plurality of transport positions (3) each comprising a container gripper (4) for holding a container (2) suspended by a container region (2.1) beneath a container mouth (2.2), wherein the container grippers (4) are configured according to any one of the preceding claims.

10. The transporting element of claim 10 wherein means for moving the respective locking portion (9) into its non-locked state are provided at transfer regions where containers are transferred to and received from the transport positions (3).

11. The transporting element of claim 10 or 11 wherein means for moving the respective locking portion (9) into its non-locked state are formed by a run-up edge or by a ramp wedge (15).

## Revendications

1. Système préhenseur de contenants pour une fixation de manière suspendue de contenants au niveau d'une zone de contenant (2.1) sous une embouchure de contenant (2.2), par exemple de bouteilles au niveau d'un goulot de bouteille, comprenant deux bras ou segments (6, 7), qui forment entre eux, au niveau d'un côté avant (4.1) du système préhenseur de contenant (4), un logement de contenant (11) et qui peuvent être déplacés de manière à s'écarter l'un de l'autre en quittant une position de fermeture à l'encontre de l'action d'une force de fermeture aux fins de l'ouverture du logement de contenant (11), sachant que le système préhenseur de contenant (4) est fabriqué à cet effet avec les segments (6, 7) formant le logement de contenant (11) et avec une section à ressorts (8) agissant entre lesdits segments (6, 7), exerçant une précontrainte sur les segments (6, 7) pour les amener dans la position de fermeture,
**caractérisé en ce**
**que** le système préhenseur de contenant est fabriqué d'un seul tenant avec une section de verrouillage (9), qui peut être déplacée sur ressorts entre une position verrouillant le système préhenseur de contenant (4) et une position ne verrouillant pas le système préhenseur de contenant (4).

2. Système préhenseur de contenant selon la revendication 1, **caractérisé en ce que** la section à ressorts (8) est réalisée sous la forme d'un étrier et/ou est disposée entre les segments (6, 7).

3. Système préhenseur de contenant selon la revendication 1 ou 2, **caractérisé en ce que** les segments (6, 7) sont réalisés respectivement en vue d'une fixation pouvant pivoter au niveau de l'élément de transport (1).

4. Système préhenseur selon l'une quelconque des revendications précédentes, **caractérisé en ce que** la section à ressorts (8) dépasse, dans la zone du logement de contenant (11), dans les segments (6, 7).

5. Système préhenseur selon l'une quelconque des revendications précédentes, **caractérisé en ce que** lors de la réalisation sous une forme d'étrier de la section à ressorts (8), cette dernière présente au moins deux branches (13), qui dépassent, au niveau d'une extrémité, respectivement au niveau de côtés intérieurs tournés les uns vers les autres, des segments (6, 7), dans ces derniers.

6. Système préhenseur de contenant selon l'une quelconque des revendications précédentes, **caractérisé en ce que**, lors de la réalisation sous une forme d'étrier de la section à ressorts (8), les deux branches (13) s'imbriquent l'une dans l'autre par l'intermédiaire d'une bride de verrouillage formant la section de verrouillage (9), et **en ce que** la bride de verrouillage se rétrécissant dans la largeur en direction d'une extrémité (9.1) libre repose, dans la position de verrouillage, par son bord, contre des surfaces intérieures ou des bords intérieurs (6.1, 7.1), tournées/tournés les uns/unes vers les autres, des segments (6, 7).

7. Système préhenseur selon l'une quelconque des revendications précédentes, **caractérisé en ce que** les segments (6, 7) sont réalisés de manière plate ou a la manière de leviers plats.

8. Système préhenseur selon l'une quelconque des revendications précédentes, **caractérisé en ce que** lors de la réalisation sous une forme d'étrier de la section à ressorts (8), les branches (13) de la section à ressorts (8) sont pliées ou coudées de telle manière qu'il en résulte, pour la section à ressorts (8), un profil à la manière d'un crochet de telle manière que la section à ressorts (8) présente, en direction d'un côté arrière (4.2), opposé au logement de contenant (11), du système préhenseur de contenant (4), dans un premier temps, une distance croissante par rapport aux segments (6, 7) et atteint l'espace entre les segments (6, 7) immédiatement après par une bride verrouillage formant la section de verrouillage (9).

9. Elément de transport pour des contenants (2), comprenant plusieurs positions de transport (3), qui présentent respectivement un système préhenseur de contenant (4) servant à la fixation de manière suspendue d'un contenant (2) au niveau d'une zone de contenant (2.1) sous une embouchure de contenant (2.2),
**caractérisé en ce**
**que** les systèmes préhenseurs (4) sont réalisés selon l'une quelconque des revendications précédentes.

10. Elément de transport selon la revendication 10, **caractérisé en ce que** sont prévus, au niveau des zones de transfert, au niveau desquelles un transfert de contenants aux positions de transport (3) est effectué et un rentrait de contenants des positions de transport (3) est effectué, des moyens servant à déplacer la section de verrouillage (9) concernée dans son état de non-verrouillage.

11. Elément de transport selon la revendication 10 ou 11, **caractérisé en ce que** des moyens servant à déplacer la section de verrouillage (9) concernée dans son état de non-verrouillage sont formés par une arête inclinée ou par une clavette inclinée (15).
